# EUROPÄISCHE PATENTANMELDUNG

(11) **EP 0 652 499 A1**
(43) Veröffentlichungstag der Anmeldung: **10.05.1995**
(21) Anmeldenummer: 94810633.1
(22) Anmeldetag: 02.11.1994
(51) Int. Cl.: G05B 19/35

(54) **Motorische Verstelleinrichtung für Maschinen**

(30) Priorität: 08.11.1993 CH 3345/93
(71) Anmelder: GRAPHA-HOLDING AG, CH-6052 Hergiswil (CH)
(72) Erfinder: Duss, Hanspeter, CH-5014 Gretzenbach (CH); Schweizer, Thomas, CH-4806 Wikon (CH)

(57) **Zusammenfassung**

In der motorischen Verstelleinrichtung für Maschinenachsen ist für die jeweilige zu verstellende Achse (2) in einer Verstelleinheit (1) ein Motor (4) über ein entsprechendes Getriebe (3) direkt mit der zu verstellenden Achse (2) und mit einem Weggeber (5), beispielsweise einem Potentiometer, verbunden. Sowohl die Speisung des Motors (4), als auch die Signale des Weggebers (5) sind über einen adressierbaren Knoten (7) mittels eines Bus' (9) an eine Bedienungseinheit (14) angeschlossen. Diese übt Kontrollfunktionen wie Wegbegrenzung, Überlastabschaltung, Feststellung von Sollwertabweichungen aus. In der Bedienungseinheit (14) kann für jede Achse (2) der Verstellbereich, der Massstab und die Masseinheit festgelegt und gespeichert werden. Mehrere Bedienungseinheiten, von welchen jede einer von mehreren Maschinen zugeordnet ist, können über eine Schnittstelle (16) mit einer Zentrale (15) verbunden sein.

Mit dieser Verstelleinrichtung für Maschinenachsen gelingt es auf einfache Weise, die mechanischen Bauteile in universeller Weise mit elektronischen Eigenschaften zu versehen, die sie von sich aus nicht oder nur mit viel Aufwand haben.

## Beschreibung

Die vorliegende Erfindung bezieht sich auf eine motorische Verstellvorrichtung für Maschinenachsen.

Allgemein sind Einrichtzeiten bei Maschinen von immer grösserer Bedeutung für einen wirtschaftlichen Einsatz der Maschinen. Dies trifft einerseits wegen der geforderten Nettoleistung der Maschinen und andererseits wegen der durch Sicherheitsvorrichtungen zunehmend verbauten Zugänglichkeit zu Maschinenteilen zu. Insbesondere sind diese Umstände für Maschinen der graphischen Weiterverarbeitung von entscheidender Bedeutung.

Es sind verschiedene motorische Verstellungen bekannt. Diese sind stets für bestimmte Anwendungen entworfen worden und sind deshalb meist nicht für einen allgemeinen Einsatz geeignet. Verstellfunktionen können zum Beispiel mit üblichen Maschinenteilen realisiert werden. Dies führt jedoch auf grosse und teure Lösungen, die nur in Einzelfällen sinnvoll sind. Für breite und modulare Anwendungen müssen eine ganze Anzahl von Forderungen erfüllt werden, wie etwa:
a) billiger Preis, da meist mehrere bis sehr viele Achsen betätigt werden sollen;
b) dafür nur beschränkte Lebensdauer, da die Verstellung viel weniger betätigt wird als die Verarbeitungsmaschine selbst;
c) geringer Platzbedarf;
d) kompakte Verdrahtungsmöglichkeit, da auch an beweglichen Elementen in den Verarbeitungsmaschinen installiert werden muss und die Zugänglichkeit und Wartbarkeit der Maschine nicht behindert werden darf;
e) einfache Überlastabsicherung, da sich Gegenstände im Verfahrweg befinden können;
f) Lageanzeige, mit Vorteil absolut;
g) Möglichkeit Handüberlagerung für Notbetrieb oder konventionell arbeitende Operateure;
h) sehr unterschieliche Verstellbereiche in demselben System (kleinste bis grosse Verfahrwege und Lasten);
i) kein Wegdriften im Betrieb, zum Beispiel infolge Vibrationen;
k) allenfalls der Wunsch, spezielle Grund- oder Standardeinstellungen abspeichern und wieder abrufen zu können.

Es ist daher die Aufgabe der vorliegenden Erfindung, eine den Verarbeitungsmaschinen angepasste motorische Verstelleinrichtung zu schaffen, die mindestens einen Teil der obengenannten Anforderungen in einer einzigen Baureihe erfüllt.

Zur Lösung dieser Aufgabe weist die erfindungsgemässe motorische Verstelleinrichtung die im Patentanspruch 1 angeführten Merkmale auf. Es gelingt damit, mechanische Bauteile in universeller Weise mit elektronischen Eigenschaften zu versehen, die sie von sich aus nicht oder nur mit viel Aufwand haben.

Vorteilhafte Ausführungsformen der erfindungsgemässen Verstelleinrichtung sind in den abhängigen Patentansprüchen definiert.

Ausführungsbeispiele der Erfindung werden nachstehend anhand der Zeichnungen erläutert. Es zeigen:
- Fig. 1: ein Prinzipschema einer motorischen Verstelleinheit und ihre Verbindungen mit einer maschinengebundenen Bedienungseinheit über einen Knoten und einen Bus;
- Fig. 2: ein Blockschema des Knotens der Fig. 1 und
- Fig. 3: ein Blockschema der maschinengebundenen Bedienungseinheit der Fig. 1.

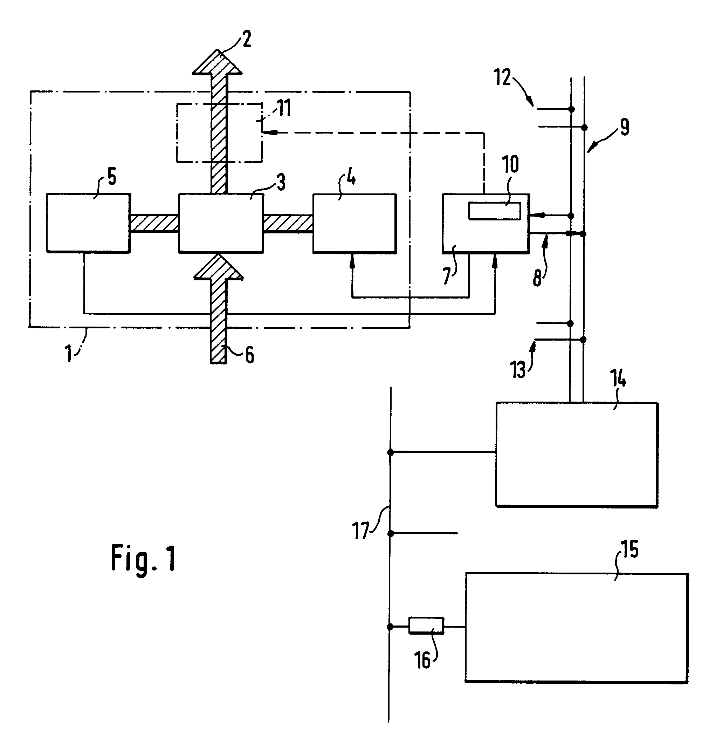

Aus Fig. 1 ist eine motorische Verstelleinheit 1 für eine einzustellende Achse 2 ersichtlich. Als Beispiel einer Maschine, bei welcher mindestens eine Achse, zumeist aber deren mehrere, eingestellt werden soll, sei ein Anleger einer Einsteck-,Sattelheft- oder Buchbindemaschine genannt. Durch mehrere solcher Anleger erfolgt bekanntlich bei der Weiterverarbeitung von Druckbogen die Vereinzelung gestapelter Druckbogen für die Herstellung einer Broschur, meist mittels rotierender, in den Anlegern vorhandener Greifertrommeln.

Im Anleger müssen vor Beginn der Weiterverarbeitung insbesondere die folgenden, auf die jeweiligen Druckbogen bezogenen Distanzen bzw. Elemente eingestellt werden:
. die Bogenlänge
. die Bogenbreite
. der Bogenanschlag
. die Bogenbremse
. die Andrucksrollen und
. die Separiernadeln der seitlichen Anschläge.

Die in Fig. 1 schematisch dargestellte Achse 2 bezieht sich demnach auf die Achse einer Einstellvorrichtung zur Veränderung eines der obengenannten Anlegerparameters. Somit sind im Anleger mehrere Verstelleinheiten 1 vorhanden, um die genannten Einstellungen vornehmen zu können.

In Fig. 1 ist ferner dargestellt, dass die einzustellende Achse 2 über ein Getriebe 3 von einem Motor 4 angetrieben ist. Der Motor 4 kann ein Wechsel- oder Gleichstrommotor sein. Da die zum Drehen der Achse 2 benötigte Leistung meistens klein ist, genügt ein entsprechend kleiner Elektromotor. Statt eines solchen Motors können zur Bewegung der Achse 2 auch Elektromagnete, elektropneumatische Ventile und dergleichen vorgesehen werden.

Mit einer Welle des Getriebes 3 ist ferner die Achse eines Potentiometers 5 verbunden, das mit Vorteil als 10 Gang-Potentiometer ausgebildet ist. Auf das Getriebe 3 und somit auf die Achse 2 und das Potentiometer 5 wirkt zudem eine Handverstelleinrichtung 6.

Der Motor 4 und das Potentiometer 5 sind an einen Knoten 7 angeschlossen, welcher einerseits den Motor 4 treibt und welchem andererseits ein der jeweiligen Stellung des Pontiometers 5 und damit der Stellung der Achse 2 entsprechendes Signal zugeführt ist. Der Knoten 7 ist über mehrere Leitungen 8, welche nachstehend noch erläutert werden, mit einem Bus 9 verbunden. Unter einem Bus wird in bekannter Weise eine Information vermittelnde Verbindung zwischen selektiv adressierbaren elektrischen Knoten verstanden. Der Knoten 7 enthält dementsprechend eine Adressierlogik 10.

Für den Fall, dass die Selbsthemmung des Getriebes 3 und der mit diesem verbundenen Achse 2 das ungewollte Verstellen infolge Vibrationen und dergleichen im Betrieb nicht zuverlässig ausschliesst, kann für die Achse 2 eine angedeutete Verriegelungsvorrichtung 11 vorgesehen werden, die vom Knoten 7 gesteuert wird.

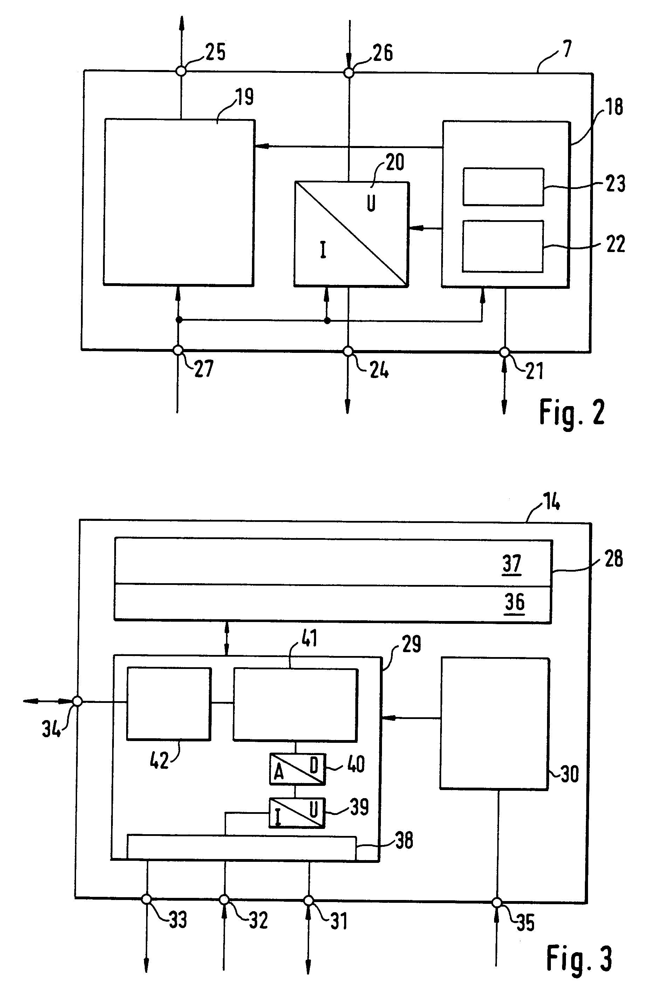

Wie bereits erwähnt, ist jeder einzustellenden Achse 2 der Maschine, im vorliegenden Fall des Anlegers, eine Verstelleinheit 1 gemäss Fig. 1 zugeordnet. Die jeweiligen Knoten 7 weisen selbstverständlich unterschiedliche Adressen auf und sind über die angedeuteten Leitungen 12 und 13 mit dem Bus 9 verbunden. Weitere Einzelheiten des Aufbaus des Knotens 7 folgen nachstehend anhand der Fig. 2.

Der Bus 9 ist an eine Bedienungseinheit 14 angeschlossen, die auf der Maschine bzw. dem Anleger installiert ist. Die Bedienungseinheit 14 weist Bedienungselemente, zum Beispiel Tasten, ferner eine Anzeigeeinheit, Speichermittel und einen Busmaster auf. Weitere Einzelheiten folgen anhand der Fig. 3.

Aus Fig. 1 ist ferner ersichtlich, dass beim vorliegenden Ausführungsbeispiel eine Zentrale 15 vorhanden ist, welche über eine Schnittstelle 16 sowie Leitungen 17 mit der Bedienungseinheit 14 und weiteren, nicht dargestellten Bedienungseinheiten, die jeweils anderen Maschinen bzw. Anlegern zugeordnet sind, verbunden ist. Die Zentrale 15 ermöglicht eine zentrale Steuerung aller vorhanden Maschinen bzw. Anleger.

Gemäss dem Blockschema der Fig. 2 weist der Knoten 7 ein Steuerteil 18, einen Leistungstreiber 19 und einen Spannnungs/Stromwandler 20 auf. Der Knoten 7 hat einen digitalen Bus-Anschluss 21, der mit dem Steuerteil 18 verbunden ist, um digitale Signale zu empfangen und abzugeben. Das Steuerteil 18 enthält eine Adressierlogik 22 und eine Knotenadresse 23. Ferner hat der Knoten 7 einen analogen Bus-Anschluss 24, der mit dem Ausgang des Spannungs/Stromwandler 20 verbunden ist. Das Steuerteil 18 gibt Steuersignale an den Leistungstreiber 19 und an den Spannungs/Stromwandler 20 ab. Der Leistungstreiber 19 ist mit einem Verbraucheranschluss 25 verbunden, an welchen der Motor 4 der Fig. 1 angeschlossen ist. Der Eingang des Spannungs/Stromwandlers 20 ist mit einem Messanschluss 26 verbunden, an welchen das Potentiometer 5 der Fig. 1 angeschlossen ist.

Die Stromversorgung des Steuerteils 18, des Leistungstreibers 19 und des Spannungs/Stromwandlers 20 erfolgt über einen Speiseanschluss 27. Sowohl der digitale Bus-Anschluss 21 und der analoge Bus-Anschluss 24, als auch der Speiseanschluss sind, wie in Fig. 1 andeutet, über die Leitungen 8 mit je einer Ader oder mehreren Adern des Bus' 9 verbunden.

Aus dem Blockschema der Fig. 3 ist ersichtlich, dass die Bedienungseinheit 14 eine Ein- und Ausgabeeinheit 28, eine Steuereinheit 29 und eine Stromversorgungseinheit 30 enthält. Die Bedienungseinheit 14 ist über einen digitalen Bus-Anschluss 31, einen analogen Bus-Anschluss 32 und einen Speiseanschluss 33 mit dem Bus 8 der Fig. 1 und damit mit allen Knoten 7 der betreffenden Maschine bzw. des betreffenden Anlegers verbunden. Ein weiterer Anschluss 34 ist mit der Zentrale 15 der Fig. 1 verbunden.

Schliesslich ist ein weiterer Speiseanschluss 35 vorhanden, an welchen innerhalb der Bedinungseinheit 14 die Stromversorgungeinheit 30 angeschlossen ist und welchem von einer äusseren, nicht dargestellten Stromquelle die erforderliche Speiseenergie zugeführt ist, beispielsweise Gleichstrom mit einer Spannung von 24 Volt.

Die Ein- und Ausgabeeinheit 28 besteht aus einem Bedienungsteil 36 und einem Anzeigeteil 37. Am Bedienungsteil 36 kann, beispielsweise mittels Drucktasten, die jeweils einzustellende Achse 2 (Fig. 1) ausgewählt und eingestellt werden, wobei die entsprechenden Steuersignale über den digitalen Bus-Anschluss 31 mit der gewünschten Adresse versehen an den Bus 8 der Fig. 1 abgegeben werden und damit die ausgewählte Achse 2 betätigen. Die sich dadurch verändernde Stellung der Achse 2 bzw. die momentane Einstellung des betreffenden Maschinenteils kann auf dem Anzeigeteil, beispielsweise einer FlüssigkristallPlatte, abgelesen werden. Diese Lageinformation gelangt vom Potentiometer 5 der Verstelleinheit 1 an den analogen Bus-Anschluss 32. Die Bus-Anschlüsse 31, 32 und 33 stehen mit einem Interface 38 des Busmasters im Steuerteil 29 in Verbindung. Der Steuerteil 29 enthält zudem einen Strom/Spannungswandler 39, einen Analog/Digitalwandler 40, eine µP-System mit nichtflüchtigem Speicher und eine Serie-Schnittstelle 42 zum Anschluss 34 an die Zentrale 15.

Mit Vorteil ist die Ein- und Ausgabeeinheit 28 derart ausgebildet und auf der Maschine angeordnet, dass sie von zwei Maschinenseiten aus bedienbar und einsehbar ist, beispielsweise von vorne und von hinten. Der Anzeigeteil 37 kann mehrere Anzeigezeilen enthalten, so dass mehrere Einstellungen gleichzeitig sichtbar sind.

Die Handverstelleinrichtung 6 der Fig. 1 erlaubt Feinverstellungen oder einen manuellen Notbetrieb. Uber das gleichzeitig betätigte Potentiometer 5 gelangt das entsprechende Messignal zur Bedienungseinheit 14 und wird dort im Anzeigeteil 38 einsehbar. Hierbei ist es vorteilhaft, wenn die Bedienungseinheit 14 so ausgebildet ist, dass bei einer Handverstellung einer der Aschsen 2 die Anzeige in der Bedienungseinheit 14 automatisch auf die betreffende Achse umgestellt wird.

Ferner kann jeder der Knoten 7 (Fig. 1) mit einer Strommessvorrichtung versehen sein, die einen Überstrom durch ein entsprechendes Signal über den Bus 9 an die Bedienungseinheit 14 überträgt, worauf diese den betreffenden Motor abschaltet. Ein derartiger Überstrom kann dann auftreten, wenn die Verstellbewegung gehemmt wird, beispielsweise durch ein Produkt, einen Hilfsanschlag oder einen versehentlich in Wege liegenden Gegenstand.

Eine weitere Sicherheitsmassnahme kann darin bestehen, dass die Bedienungseinheit 14 Schaltmittel aufweist, um die Analogsignale der Potentiometer 5 zu überwachen und bei festgestellter Abweichung zu korrigieren.

Die beschriebene Verstelleinrichtung erlaubt drei verschiedene Betriebsarten:
. Einmal können die erforderlichen Verstellungen in bekannter Weise von Hand vorgenommen werden, wobei jedoch der Vorteil besteht, dass die jeweiligen Einstellungen sofort einsehbar sind.
. Des weitern können die erforderlichen Verstellungen durch Tastenbetätigung an der Bedienungseinheit 14 vorgenommen und dort ebenfalls abgelesen werden.
. Schliesslich können Einstellungen, die für ein bestimmtes Produkt vorgenommen wurden, in der Bedienungseinheit 14 gespeichert und zu irgend einem späteren Zeitpunkt abgerufen und automatisch zwecks entsprechender Verstellung aktiviert werden.

Die Bedienungseinheit 14 übt demnach zahlreiche Kontrollfunktionen wie Wegbegrenzung, Überlastabschaltung, Feststellung von Sollwertabweichungen, Drehsinn unsw. aus. In der Bedienungseinheit 14 kann für jede Achse der Verstellbereich, der Massstab und die Masseinheit, zum Beispiel in mm für den Verfahrweg, p für die Anpresskraft einer Feder usw., festgelegt und gespeichert werden.

Die Bedienungseinheit 14 kann für alle Verstellvorgänge derart ausgebildet sein, dass durch Adressieren der entsprechenden Knoten verschiedene Achsen nacheinander oder gleichzeitig verstellt werden.

Wie anhand der Fig. 1 beschrieben, steht die Zentrale 15 über eine Schnittstelle (zum Beispiel RS 485) mit einer oder mehreren Bedienungseinheiten 14 in Verbindung, um eine zentrale Verstellung mehrerer oder aller räumlich getrennten Maschinen bzw. Anleger vornehmen zu können. Je nach Anforderungen kann hierbei die Zentrale 15 mit allen oder nur einem Teil der Bedienungs- und Anzeigeelemente der einzelenen Bedienungseinheiten 14 versehen sein. Umgekehrt können in den Bedienungseinheiten die beschriebenen Bedienungs- und Anzeigeelemente nur teilweise vorhanden sein, wenn die Zentrale 15 mit den Bedienungseinheiten 14 in einem Master/Slave-Betrieb arbeiten soll. Die Zentrale 15 kann aus einem Personal Computer, aus einer speicherprogrammierbaren Steuerung oder aus einer bereits vorhandenen, zu erweiternden Maschiensteuerung bestehen.

Um eine analoge bzw. digitale sowie eine serielle bzw. parallele Signalübertragung über den Bus 9 (Fig. 1) vornehmen zu können, stehen die folgenden Mittel zur Verfügung:
. digitale Signalübertragung über Analog/Digitalwandler;
. analoge Signalübertragung mit Spannungs/Stromquellen auf den Knoten, zum Beispiel mit einer spannungsgesteuerten Stromquelle gemäss Fig. 2;
. serielle Übertragung mit einer bis zwei Leitungen (Bidirektionaler/unidirektionaler Ein- und Ausgang);
. parallele Übertragung über mehrere parallele Leitungen, zum Beispiel mit Steuerleitungen zur Angabe der Bedeutung der verschiedenen Leitungen, mit n Adressleitung für 2ⁿ Adressen, mit digitalen und/oder analogen Datenleitungen, und mit eventuellen Masseleitungen.

Dazu kann der Bus zusätzliche Speiseleitungen enthalten.

Um eine Erweiterung der vorliegenden Verstelleinrichtung zu erzielen, kann der Bus 9 zur Erzielung einer Baumstruktur in einfacher Weise spleissbar sein. Als Mittel hierzu dient der Verzicht auf Inpedanzanpassungen am Bus-Ende sowie eine Begrenzung des Spannungsanstiegs am Ausgang des Bus-Treibers auf beispielsweise weniger als 10 V/µs zwecks Vermeidung von Reflexionen.

## Patentansprüche

1. Motorische Verstelleinrichtung für Maschinenachsen, dadurch gekennzeichnet, dass in einer Verstelleinheit (1) über ein entsprechendes Getriebe (3) ein Motor (4), direkt mit der zu verstellenden Achse (2) und einem Weggeber (5) verbunden ist, und dass sowohl die Speisung des Motors (4), als auch die Signale des Weggebers (5) über einen adressierbaren Knoten (7) mittels eines Bus (9) an eine Kontrollfunktionen ausübende Bedienungseinheit (14) angeschlossen sind.

2. Verstelleinrichtung nach Anspruch 1, dadurch gekennzeichnet, dass der Weggeber (5) ein Potentiometer ist.

3. Verstelleinrichtung nach Anspruch 1 oder 2, dadurch gekennzeichnet, dass die Bedienungseinheit (14) dazu ausgebildet ist, für jede Achse (2) einen Bereich, einen Massstab und eine Masseinheit festzulegen und zu speichern.

4. Verstelleinrichtung nach einem der Ansprüche 1 bis 3, dadurch gekennzeichnet, dass der Bus (9) zur seriellen oder parallelen Übertragung von digitalen und/oder analogen Signalen ausgebildet ist.

5. Verstelleinrichtung nach einem der Ansprüche 1 bis 4, dadurch gekennzeichnet, dass der Bus (9) mittels Verzicht auf Impedanzanpassungen und mittels Begrenzung der zeitlichen Spannungsänderung am Ausgang eines Bustreibers spleissbar und erweiterbar ist.

6. Verstelleinrichtung nach einem der Ansprüche 1 bis 5, dadurch gekennzeichnet, dass die Verstelleinheit (1) mit einer manuell betätigbaren Verstellvorrichtung (6) versehen ist.

7. Verstelleinrichtung nach einem der Ansprüche 1 bis 6, dadurch gekennzeichnet, dass die Verstelleinheit (1) mit einer über den Knoten (10) steuerbaren Verriegelungsvorrichtung (11) versehen ist.

8. Verstelleinrichtung nach einem der Ansprüche 1 bis 7, dadurch gekennzeichnet, dass der Motor (4) ein Elektromotor ist.

9. Verstelleinrichtung nach einem der Ansprüche 1 bis 8, dadurch gekennzeichnet, dass die Bedienungseinheit (14) einen Bedienungsteil (36) und einen Anzeigeteil (37) enthält, um eine oder gleichzeitig mehrere durch die Verstelleinheit (1) bewirkte Einstellungen anzuzeigen.

10. Verstelleinrichtung nach den Ansprüchen 5 und 9, dadurch gekennzeichnet, dass die Bedienungseinheit (14) dazu ausgebildet ist, durch periodisches Abfragen des Einstellwertes des Weggebers (5) und Vergleichen mit dem Sollwert automatisch festzustellen, wenn eine Achse (2) manuell verstellt wird, und dass der Anzeigeteil (37) der Bedienungseinheit dazu ausgebildet ist, automatisch auf die Anzeige des aktuellen Wertes dieser Achse (2) umzuschalten.

11. Verstelleinrichtung nach einem der Ansprüche 1 bis 10, dadurch gekennzeichnet, dass die Bedienungseinheit (14) dazu ausgebildet ist, durch Erfassen des Stromes des Motors (4) eine Hemmung des Motors (4) festzustellen und bei Überschreitung eines vorgewählten Wertes den Motor (4) automatisch abzustellen.

12. Verstelleinrichtung nach einem der Ansprüche 1 bis 11, dadurch gekennzeichnet, dass die Bedienungseinheit (14) dazu ausgebildet ist, durch periodisches Abfragen des Einstellwertes des Weggebers (5) und Vergleichen mit dem Sollwert automatisch festzustellen, wenn eine Achslage sich langsam verstellt, um die Einstellung wieder auf den Sollwert zu korrigieren.

13. Verstelleinrichtung nach einem der Ansprüche 1 bis 12, dadurch gekennzeichnet, dass die Bedienungseinheit (14) von mehr als von einer Seite bedienbar ist.

14. Verstelleinrichtung nach einem der Ansprüche 1 bis 13, dadurch gekennzeichnet, dass mindestens eine Bedienungseinheit (14) über eine Schnittstelle (16) mit einer Zentrale (15) verbunden ist.

15. Verstelleinrichtung nach Anspruch 14, dadurch gekennzeichnet, dass die Bedienungseinheit (14) dazu ausgebildet ist, entweder in einem Master/Slave-Betrieb mit der Zentrale (15) oder autonom zu arbeiten.

16. Verstelleinrichtung nach Anspruch 14 oder 15, dadurch gekennzeichnet, dass die Bedienungseinheit (14) und/oder die Zentrale (15) zur Speicherung, Verwaltung und Initialisierung vorbestimmter Einstellungen ausgebildet ist.

17. Verstelleinrichtung nach einem der Ansprüche 14 bis 16, dadurch gekennzeichnet, dass die Bedienungseinheit (14) und/oder die Zentrale (15) zur aufeinanderfolgenden Verstellung mehrerer Maschinenachsen (2) ausgebildet sind.

18. Verstelleinrichtung nach einem der Ansprüche 14 bis 16, dadurch gekennzeichnet, dass die Bedienungseinheit (14) und/oder die Zentrale (15) zur gleichzeitigen Verstellung mehrerer Maschinenachsen (2) ausgebildet sind.
